# FASCICULE DE BREVET EUROPEEN

(11) **EP 3 337 963 B1**
(45) Date de publication et mention de la délivrance du brevet: **29.01.2020**
(21) Numéro de dépôt: 16770045.9
(22) Date de dépôt: 19.08.2016
(51) Int. Cl.: F01P 7/14, F01P 3/20, F28D 20/02, F01P 7/16, F01P 11/20, F28D 20/00, B60K 11/02, F01P 11/14

(54) **CIRCUIT ET PROCEDE DE REFROIDISSEMENT SUR UN VEHICULE**
KÜHLKREIS UND VERFAHREN AN EINEM FAHRZEUG
COOLING CIRCUIT AND METHOD ON A VEHICLE

(30) Priorité: 20.08.2015 FR 1557840
(43) Date de publication de la demande: 27.06.2018
(73) Titulaire: Hutchinson, 75008 Paris (FR)
(72) Inventeur: CHOPARD, Fabrice, 75008 Paris (FR); DOMINIAK, Christophe, 45290 VARENNES CHANGY (FR)
(74) Mandataire: Pichat, Thierry
(86) Numéro de dépôt international: PCT/FR2016/052096
(87) Numéro de publication internationale: WO 2017/029459

(56) Documents cités:
- WO-A1-95/29057
- WO-A1-97/47937
- WO-A1-2010/132726
- DE-A1- 19 535 027
- US-A1- 2005 167 169
- US-A1- 2013 221 013

## Description

La présente invention concerne la circulation d'un fluide caloporteur dans un circuit de refroidissement de véhicule.

A partir de DE19535027 A1 il est connu un système de gestion de température sur un circuit de refroidissement d'un véhicule par un liquide caloporteur, le circuit comprenant un chemin de circulation du liquide et, disposés sur le chemin :
- en série, un moyen de mise en circulation du liquide sur le chemin, un moteur de déplacement du véhicule, dont des organes sont à placer en échange thermique avec le liquide, et un échangeur de chaleur présentant une entrée et une sortie pour ledit liquide afin d'y placer ce liquide en échange thermique avec un autre fluide,
- branché (c'est-à-dire monté sur une première branche) entre l'entrée et la sortie de l'échangeur de chaleur, un accumulateur de chaleur où peut entrer et d'où peut sortir ledit liquide,
- et des vannes placées pour que du liquide arrivant du moteur circule vers l'échangeur de chaleur et/ou l'accumulateur de chaleur.

Mais, dans DE19535027 A1, il s'agit notamment d'utiliser l'accumulateur de chaleur pour valoriser la chaleur sensible en vue du chauffage des moteurs de véhicules dans le but de réduire les émissions d'échappement. le coût du stockage thermique pour la chaleur sensible étant présenté comme favorable et les fluides caloporteurs pour le stockage de chaleur latente présentés comme agressifs dans le circuit de refroidissement d'un moteur; voire dangereux.

Or, les objectifs ici visés concernent:
- une performance énergétique élevée (stockage rapide d'une énergie thermique disponible préférentiellement au bout d'environ 5-20 minutes, maintien de cette énergie pendant 6 à 15 heures, avant sa restitution rapide, typiquement en quelques minutes (en particulier moins de 2-3 mns),
- des volumes (encombrements) et/ou poids limités,
- des montages et cycles de fonctionnement fiables, simples à réaliser, installer et maintenir dans le temps, permettant favorablement de faire face aux situations critiques pouvant être rencontrés par ces véhicules,
- des coûts de fabrication, installation et fonctionnement fiables, compatibles avec une mise en œuvre en grande série (comme dans le domaine automobile).

Chacun des documents WO97/47937 A1 et US2005/167169 A1 divulgue un système selon le préambule de la revendication 1.

C'est dans ce contexte d'art antérieur qu'est proposé selon l'invention un système selon la revendication 1, un procédé selon la revendication 11 et un procédé selon la revendication 13.

Ainsi, on associera la performance thermique liée à l'utilisation de la chaleur latente et celle de la barrière thermique de protection et de gestion thermique.

Favorablement, pour valoriser au mieux l'utilisation de la chaleur latente dans ladite unité, il est proposé que certains au moins desdits éléments à MCP aient une température de fusion inférieure ou égale à la température de fusion du matériau MCP de ladite première couche.

Comme on l'aura compris, autant lesdits éléments à MCP de l'unité seront en échange thermique avec ledit liquide qui circulera au milieu d'eux, autant le matériau MCP qui entoure le volume global qui les contient ne sera pas en contact avec ce liquide. Il sera par contre bien entendu sensible aux échanges thermiques survenus dans le volume, afin de stocker ou libérer de l'énergie thermique en fonction de la température du liquide en circulation au milieu desdits éléments à MCP de l'unité. Quant à la seconde couche contenant le matériau isolant thermique, elle préservera des conditions extérieures environnantes l'intérieur de l'unité, et donc favorisera la meilleure utilisation souhaitée de la chaleur latente.

Il est précisé qu'un matériau à changement de phase -ou MCP-désignera tout matériau capable de changer d'état physique dans une plage de température restreinte. Le stockage thermique s'opère par utilisation de sa Chaleur Latente : le matériau peut alors stocker ou céder de l'énergie par simple changement d'état, tout en conservant une température sensiblement constante, celle du changement d'état.

Par ailleurs, les « véhicules » évoqués ci-avant seront ceux que déplacent les moteurs précités, dans les domaines automobiles (voitures, camions...), aéronautiques et maritimes (navires de surface, sous-marins, engins flottants divers...), en particulier.

Ceci a pour conséquence que le terme échangeur ci-avant inclut :
- tant un radiateur d'automobile ou d'avion en général du type échangeur fluide (air)/liquide (eau glycolée),
- qu'un échangeur liquide/liquide comme sur les structures maritimes, tels les bateaux, où le radiateur sera typiquement un échangeur liquide (eau de mer)/liquide (eau douce).

Deux montages du circuit sont possibles. Toutefois, il est proposé que dans tous les cas, lesdites vannes du circuit y soient placées de telle sorte:
- qu'en fonctionnement nominal, ledit liquide arrivant du moteur puisse :
   -- passer dans l'échangeur de chaleur sans passer dans l'unité,
   -- puis retourner au moteur,
- qu'en situation de charge de calories dans lesdits éléments à MCP de l'unité, du liquide arrivant du moteur puisse passer au moins en partie dans ladite unité et dans l'échangeur de chaleur puis retourner au moteur,
- voire que, dans une situation de décharge de calories par lesdits éléments à MCP de l'unité, du liquide arrivant du moteur puisse :
   -- passer dans l'unité sans passer dans l'échangeur de chaleur,
   --puis retourner au moteur.

Ainsi, de la chaleur latente pourra opportunément être accumulée (situation de charge) puis libérer situation de décharge), hors situation ne le permettant pas (fonctionnement nominal du circuit).

Ceci précisé, dans le premier montage (dit « en série »), il est proposé que, de préférence, les vannes comprennent :
- une première vanne trois voies placée pour faire circuler le liquide soit vers l'échangeur de chaleur soit vers ladite unité,
- une deuxième vanne deux voies placée pour autoriser en état ouvert, et interdire en état fermé, la circulation du liquide dans l'échangeur de chaleur,
- et une troisième vanne deux voies placée pour :
   -- dans ladite situation de charge de calories de l'unité, faire circuler du liquide provenant du moteur dans l'unité en fermant un retour vers le moteur court-circuitant l'échangeur de chaleur,
   -- et, dans ladite situation de décharge de calories de l'unité, faire circuler vers le moteur du liquide issu de l'unité.

Avantageusement, le fonctionnement préféré sera alors le suivant :
- en fonctionnement nominal, du liquide sorti du moteur passera dans la première vanne et ensuite totalement dans l'échangeur, sans passer dans l'unité, la deuxième vanne étant ouverte et la troisième vanne fermée,
- en situation de charge de calories de l'unité, du liquide sorti du moteur passera dans la première vanne qui le dirigera totalement vers l'unité après quoi le liquide passera dans l'échangeur puis retournera au moteur, la deuxième vanne étant ouverte et la troisième vanne fermée,
- et, en situation de décharge de calories de l'unité, le liquide passera dans la première vanne et ensuite totalement dans l'unité puis retournera au moteur, la deuxième vanne étant fermée et la troisième vanne ouverte.

Un inconvénient de cette solution simple, aisée à mettre en œuvre et efficace, est qu'elle ne permet pas de gérer les situations d'excès de charge thermique du radiateur, lorsqu'il faudrait pouvoir effacer un pic de température de ce radiateur.

Le second montage (dit « en parallèle »), comme ci-dessous, l'autorise, lorsque :
- les vannes comprennent une première vanne trois voies et des deuxième, troisième et quatrième vannes deux voies,
- le branchement de l'unité vers la sortie du échangeur de chaleur est, par rapport à la circulation du liquide, situé en aval d'une deuxième branche du chemin de circulation qui :
   -- est raccordée à la première vanne, laquelle est placée pour répartir la circulation du liquide provenant du moteur entre l'échangeur de chaleur et ladite deuxième branche,
   -- et débouche en aval de l'échangeur de chaleur pour permettre de le court-circuiter quand la première vanne est fermée vers l'échangeur de chaleur et ouverte vers cette deuxième branche,
- le branchement de l'unité vers l'entrée de l'échangeur de chaleur est, par rapport à la circulation du liquide, situé en amont de la première vanne et comprend la deuxième vanne placée sur la première branche pour :
   -- autoriser en état ouvert la circulation du liquide dans l'unité, dans un état ouvert de la première vanne,
   -- et interdire en état fermé, un retour vers la première vanne de liquide sortant de l'unité,
- une troisième branche du chemin de circulation comprend la troisième vanne et est branchée, sur la première branche, entre la deuxième vanne et ladite unité,
- et la première branche permet, dans un état fermé de la troisième vanne et ouvert de la deuxième vanne, et en situation de charge de calories de l'unité, de faire circuler le liquide sortant de la deuxième vanne vers l'unité, la troisième vanne interdisant, dans un état fermé, un retour de liquide vers le moteur par ladite troisième branche sans passage à travers l'unité et, dans un état ouvert, autorisant un retour de liquide vers le moteur, quand la quatrième vanne est fermée, la quatrième vanne étant placée pour :
   -- autoriser, en état ouvert, un tel retour du liquide, après son passage dans l'unité, dans la situation de charge de calories de ladite unité,
   -- et interdire, en état fermé, un retour vers l'échangeur de chaleur du liquide provenant de la troisième branche.

Avantageusement, le fonctionnement préféré sera alors le suivant :
- en fonctionnement nominal, du liquide sorti du moteur passe dans la première vanne et ensuite dans le l'échangeur de chaleur, sans passer dans l'unité ni dans les deuxième et troisième vannes, alors fermées, la quatrième vanne étant ouverte,
- en situation de charge de calories de l'unité, du liquide sorti du moteur passe au moins en partie dans la deuxième vanne qui le dirige vers l'unité, tandis qu'un passage à travers la première vanne vers le l'échangeur de chaleur et dans la deuxième branche est ajusté en fonction d'au moins un paramètre physique dans l'unité ou dans l'échangeur de chaleur, après quoi le liquide retourne vers le moteur, la quatrième vanne étant ouverte et la troisième vanne fermée,
- en situation de décharge de calories de l'unité, du liquide sorti du moteur passe dans la première vanne qui le dirige exclusivement dans l'unité par la deuxième branche, sans passage dans le l'échangeur de chaleur, la quatrième vanne étant fermée, après quoi le liquide retourne vers le moteur, la deuxième vanne étant fermée et la troisième vanne ouverte.

Plus loin ci-après est décrit le fonctionnement alors possible en mode « excès de charge thermique du radiateur ».

De ce qui précède on aura compris que l'unité précitée de stockage puis de restitution d'une énergie thermique permettra d'assurer la gestion thermique du fluide et même du circuit dans son ensemble, d'autant plus si l'on peut maîtriser une possible surcharge thermique du radiateur.

Pour globaliser lesdits fonctionnements préférés précités liés aux deux montages notamment imaginés, il est en outre ici proposé, pour donc gérer la température sur un circuit de refroidissement d'un véhicule comprenant un chemin de circulation d'un liquide caloporteur et, disposés sur le chemin :
- un moyen de mise en circulation du liquide sur le chemin,
- un moteur de déplacement du véhicule dont des organes sont à placer en échange thermique avec le liquide,
- un échangeur présentant une entrée et une sortie pour ledit liquide afin de le placer en échange thermique avec un autre fluide,
- avant l'entrée dans l'échangeur, une unité de stockage par chaleur latente et de restitution d'une énergie thermique où peut entrer et d'où peut sortir ledit liquide, et qui contient au moins un volume :
   -- renfermant des éléments à matériau à changement de phase, de stockage et de restitution d'une énergie thermique contenue dans ledit liquide et placés pour cela en échange thermique avec ce liquide,
   -- et autour duquel est disposée une barrière thermique comprenant au moins une première couche contenant un matériau MCP et une seconde couche contenant un matériau isolant thermique poreux, pour isoler thermiquement de l'extérieur l'unité
- et des vannes placées pour que du liquide arrivant du moteur circule vers l'échangeur de chaleur et/ou l'unité de stockage et de restitution d'énergie thermique, de telle sorte que :
- en fonctionnement nominal, du liquide sorti du moteur passe totalement dans l'échangeur de chaleur, sans que ledit liquide passe dans l'unité,
- et en situation de charge de calories par les éléments à matériau MCP de l'unité, du liquide sorti du moteur passe totalement dans l'unité après quoi le liquide passe dans l'échangeur de chaleur puis retourne au moteur.

Ainsi, on optimisera la capacité de récupération de la chaleur latente issue du liquide passé dans le moteur.

Comme expliqué en relation avec le premier montage, on pourra par ailleurs, après avoir établi dans le circuit ladite situation de charge de calories, y établir une situation de décharge de calories contenues dans les éléments à matériau MCP de l'unité, en faisant passer totalement du liquide sorti du moteur dans ladite unité, puis on fait retourner ledit liquide vers le moteur, ceci complétant dans ce cas les avantages précités.

Concernant la réalisation interne de l'unité, on a en outre cherché à lui appliquer des solutions complémentaires définies par les inventeurs : performance énergétique élevée, encombrement et/ou poids limités, montages et cycles de fonctionnement fiables, simples à réaliser, installer et maintenir dans le temps, et coûts de fabrication, installation et fonctionnement performants.

En outre, bien que leurs principes physiques semblent utiles, les matériaux MCP, comme les isolants (poreux s'il y a un vide d'air à y réaliser), ne semblent pouvoir répondre aux attentes du marché dans leurs mises en œuvre actuelles.

Aussi, conseille-t-on que soit respecté tout ou partie de ce qui suit :
a) ledit volume de l'unité est pourvu de chicanes pour faire serpenter le liquide ;
b) au moins la seconde couche contenant le matériau isolant thermique est contenue dans une enveloppe étanche audit matériau et à l'air pour que, un vide d'air étant établi dans ladite enveloppe, un panneau PIV soit constitué ;
c) le ou chaque volume est limité latéralement par une paroi périphérique en un matériau polymère moulable et les première et seconde couches sont intégrées avec ledit matériau polymère ;
d) l'unité (1) comprend plusieurs modules adjacents distincts structurellement, empilés suivant un axe et contenant chacun un sous-volume,
   - et certains au moins des modules comprennent individuellement un fond séparant deux modules adjacents transversalement audit axe, chaque fond correspondant à une dite cloison où ledit au moins un passage de communication laisse entrer et sortir le liquide, les passages étant suivant l'axe décalés latéralement les uns par rapport aux autres.

Par « PIV », on entend une enveloppe étanche sous vide d'air partiel (pression interne comprise entre 10 et 104 Pa) contenant au moins un matériau isolant thermique a priori poreux. Une alternative pourra être de remplacer le vide par un gaz ayant une conductivité thermique inférieure à celle de l'air ambiant (26mW/m.K). L'isolant peut n'être pas poreux.

« Poreux » désigne ici un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1 micron, et préférentiellement encore à 10⁻⁹m (structure nano-poreuse), pour des questions en particulier de tenue au vieillissement et donc de possible dépression moins forte dans l'enveloppe PIV.

Et la référence ci-avant à un corps en matériau moulable couvrira tant les résines thermoplastiques chargées de fibres et injectées que les résines thermodurcissables imprégnant un tissu ou un mat, tel un tissé ou un non tissé.

Si nécessaire, les différents aspects de l'invention seront encore mieux compris et d'autres caractéristiques, détails et avantages de celle-ci apparaîtront encore à la lecture de la description qui suit, faite à titre d'exemple non limitatif et en référence aux dessins annexés (où ne sont pas montrés les possibles auxiliaires nécessaires à la bonne circulation des fluides : clapets antiretour, des filtres,...) et dans lesquels :
- les figures 1-3 d'une part et 4-8 d'autre part montrent deux exemples de circuits de refroidissement intégrant un stockeur/échangeur, respectivement en série et en parallèle,
- les figures 9,10 schématisent deux versions de stockeur/échangeur, (figure 1), avec des détails concernant le(s) éléments qui le composent,
- la figure 11 schématise un module de stockeur/échangeur entouré latéralement barrière thermique active repérée 15/23 ci-après, au sein d'au moins une enveloppe étanche ;
- et la figure 12 schématise en coupe verticale trois modules de stockeur/échangeur, superposés en intégrant, de moulage chacun, une barrière thermique active dans leur parois latérale.

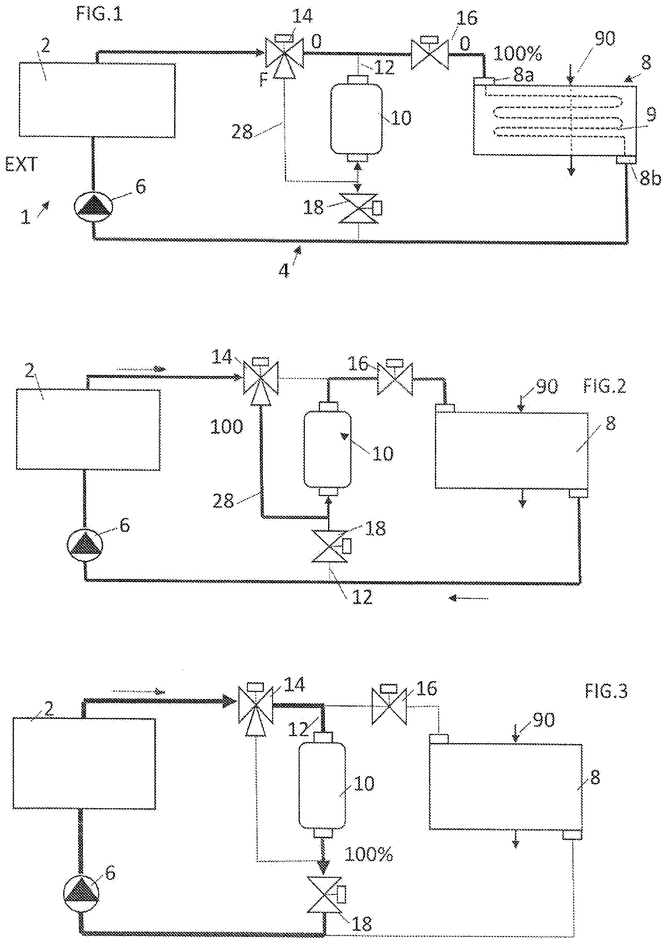

Les figures 1-8 illustrent donc deux modes de fonctionnement possibles Intégration d'un stockeur d'énergie thermique dans une boucle de refroidissement d'un véhicule. Deux types d'intégration sont donc possibles :

### 1. Intégration série ; figures 1-3 :

Le circuit de refroidissement 1 prévu sur le véhicule équipé, pour son déplacement motorisé, du moteur thermique 2, et où circule ici de l'eau, comprenant un chemin de circulation 4, en circuit fermé.

Y sont disposés en série, sur le circuit fermé de base 4a, un moyen 6 de mise en circulation du liquide, tel une pompe, le moteur 2, dont le bloc moteur est à refroidir par ce circuit d'eau, et le radiateur 8 (échangeur air/liquide de façon général, voir liquide/liquide, tel eau/eau).

Si dans l'exemple présenté le moteur 2 est thermique, il pourrait s'agir d'un moteur électrique. Donc les présentes solutions sont applicables sur véhicules à moteurs de déplacement thermiques, sur véhicules électriques et sur véhicules hybrides (à moteurs de déplacement thermiques et électriques).

L'unité 10 de stockage et de restitution ultérieure de l'énergie thermique d'abord emmagasinée est, dans l'exemple, montée sur une première branche 12 « en parallèle » entre l'entrée 8a et la sortie 8b du radiateur, dans le sens où elle permettra de court-circuiter le radiateur 8 en mode « décharge »), étant précisé que ce montage n'implique pas un fonctionnement nécessairement « parallèle », voir le mode « charge » ci-après.

Des vannes 14 (trois voies) et 16,18 (deux voies) sont placées pour diriger la circulation du liquide arrivant du moteur, vers le radiateur et/ou l'unité 10. Typiquement, il s'agira d'électrovannes commandées automatiquement par un logiciel d'un calculateur 28 distant. Les vannes 14,16 peuvent être de type tout ou rien, celle 14 à ouverture/fermeture variable, progressive.

De façon classique, l'eau sort chaude du moteur (typiquement entre 70 et 95°C) et le radiateur 9 sert à la refroidir (entre 60 et 75°C). En tant que fluide caloporteur, on va donc pouvoir utiliser cette eau chaude pour accumuler (charge) puis restituer (décharge) via l'unité 10 une partie de l'énergie thermique qu'elle contient.

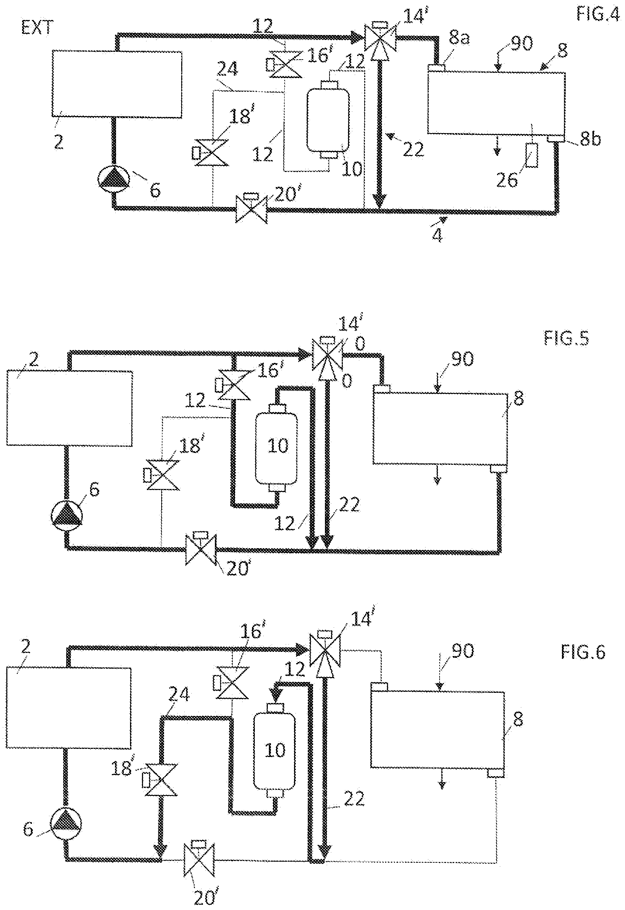

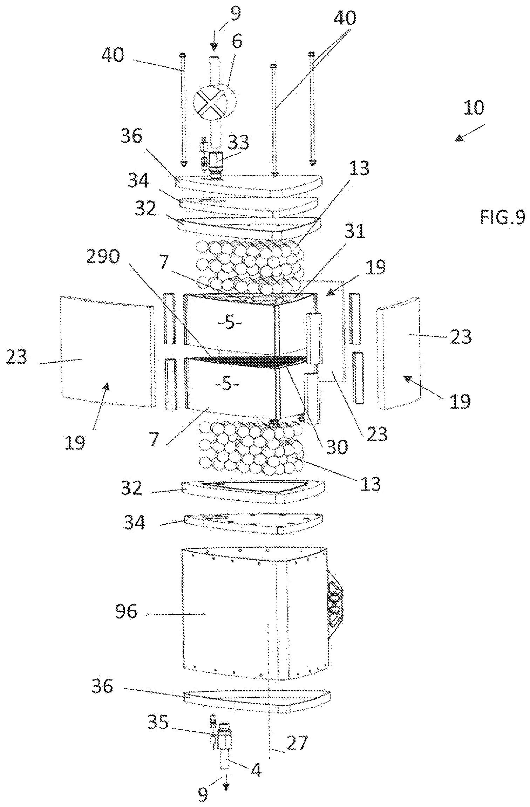

Pour cela, on voit figures 9-11, des réalisations possibles qui peuvent convenir pour assurer la double fonction ci-dessus, ces réalisations pouvant aussi s'appliquer au montage parallèle des figures 4-8.

En l'espèce, l'unité 10 contient au moins un (ici plusieurs) volume 7.

Chaque volume renferme des éléments 13 de stockage et de restitution d'énergie, à matériau à changement de phase -MCP-, placés en échange thermique avec le liquide en circulation.

Afin de favoriser le stockage de chaleur latente (mode « charge » ci-après) via ces éléments 13, au moins certains d'entre eux (s'ils sont à MCP solide/liquide) auront favorablement une température de fusion inférieure ou égale à la température de fusion du(des) matériau(x) MCP de ladite première couche 15 (ceci s'appliquant aussi au cas 2. suivant).

Autour de chaque volume sont disposés au moins une première couche 15 contenant un matériau MCP et une seconde couche 23 contenant un matériau isolant thermique poreux.

A la sortie du bloc moteur 2, l'eau qui circule dans peut être amenée directement à l'élément refroidisseur (radiateur 8). Elle peut aussi être déviée totalement (100 %) ou partiellement vers le(s) volume(s) de stockage de l'unité 10, pour assurer sa charge énergétique.

En fonctionnement NOMINAL, comme figure 1: 0% du liquide circulant dans le circuit 4 passe par l'unité 10. Par contre 100% de ce fluide alimente le radiateur 8. La vanne 18 est fermée. La vanne 16 est ouverte.

En fonctionnement de CHARGE de l'unité 10, comme figure 2 : 0% du liquide circule par le radiateur 8, tandis que 100% de ce fluide alimente l'unité 10. La vanne 18 est fermée. La vanne 16 est ouverte.

En fonctionnement de DECHARGE de l'unité 10, comme figure 3 : 0% du liquide circule par le radiateur 8, tandis que 100% de ce fluide alimente l'unité 10.. La vanne 18 est ouverte. La vanne 16 est fermée.

Ainsi, sur le circuit 4 :
- la première vanne trois voies 14 est placée pour que du liquide arrivant du moteur circule vers l'échangeur de chaleur 8 et/ou l'unité 10,
- et la deuxième vanne deux voies 16 est placée pour autoriser en état ouvert, et interdire en état fermé, la circulation du liquide dans le radiateur,
- tandis que la troisième vanne deux voies 18 est placée pour :
   -- dans la situation de charge de calories de l'unité 10 (figure 2), faire circuler le liquide provenant du moteur 2 dans l'unité 10, en fermant le retour 10a de la branche 10 vers le moteur court-circuitant le radiateur,
   -- et, dans la situation de décharge de calories de l'unité 10 (figure 3), faire circuler vers le moteur 2 le liquide sortant de cette unité 10.

Avec le montage ci-avant présenté, le fonctionnement détaillé est le suivant, comme illustré :
En fonctionnement nominal et en sortie du moteur 2, le liquide passe dans la première vanne 14 et ensuite exclusivement dans le radiateur 8, sans passer dans l'unité 10. La deuxième vanne 16 est ouverte et la troisième vanne 18 fermée.

En situation de charge de calories de l'unité 10, et en sortie du moteur, le liquide passe dans la première vanne 14 qui le dirige exclusivement vers l'unité 10, après quoi le liquide passe dans le radiateur 8 puis retourne au moteur. La deuxième vanne 16 est ouverte et la troisième vanne 18 fermée.

En situation de décharge de calories de l'unité, le liquide passe dans la première vanne 14 et ensuite exclusivement dans l'unité10 puis retourne au moteur 2. La deuxième vanne 14 est fermée et la troisième vanne 18 ouverte.

### 2. Autre intégration (dite « parallèle ») ; figures 4-8 :

Dans ce cas, les vannes comprennent une première vanne trois voies 14', et des deuxième 16', troisième 18' et quatrième 20' vannes deux voies.

Ladite première branche 12 qui comprend l'unité 10, comprend aussi la deuxième vanne 16'.

Le branchement de l'unité 10 vers la sortie 8b du radiateur est, par rapport à la circulation du liquide, situé en aval d'une deuxième branche 22 du chemin de circulation:
- qui est raccordée à la première vanne 14', laquelle est placée pour répartir la circulation du liquide sortant du moteur 2 entre le radiateur 8 et ladite deuxième branche 22, et
- qui débouche en aval du radiateur 8 pour permettre de le court-circuiter quand la première vanne 14' est fermée vers le radiateur et ouverte vers cette deuxième branche.

La première branche 12 est ainsi branchée, sur le circuit fermé de base 4a, entre l'amont de la première vanne 14' et l'aval du branchement de la deuxième branche 22, entre la sortie du radiateur 8 et la quatrième vanne 20'.

Par ailleurs, le branchement de l'unité 10 vers l'entrée du radiateur est, par rapport à la circulation du liquide, situé en amont de la première vanne 14' (entre elle et la sortie du moteur 2) et comprend la deuxième vanne 16', laquelle est placée pour :
- autoriser en état ouvert la circulation du liquide dans l'unité 10, dans un état ouvert de la première vanne 14',
- et interdire en état fermé, un retour vers la première vanne de liquide sortant de l'unité.

Une troisième branche 24 du chemin de circulation comprend la troisième vanne 18' et est branchée, sur la première branche 10 entre la deuxième vanne 16' et l'unité 10 et l'aval de la troisième vanne, sur le circuit de base 4a.

Ainsi, la troisième branche 24 permet, dans un état fermé de la troisième vanne 18' et ouvert de la deuxième vanne 16', et dans une situation de charge de calories de l'unité 10, faire circuler le liquide sortant de cette deuxième vanne vers ladite unité.

Et, dans un état fermé, la troisième vanne 18' interdit un retour direct de liquide vers le moteur 2 sans passage à travers l'unité 10 et, dans un état ouvert, autorise un tel retour direct, quand la quatrième vanne 20' est fermée.

De fait, le montage de cette la quatrième vanne 20' sur le circuit fermé de base 4a, entre le branchement aval de la première branche 12 et le moteur 2, lui permet :
- d'autoriser en état ouvert un retour du liquide vers le moteur, après son passage dans l'unité 10, dans la situation de charge de calories de ladite unité,
- et interdire en état fermé, un retour de ce liquide vers le radiateur 8, l'unité 1 ou la deuxième branche 22.

Avec un tel montage, à la sortie du bloc moteur, l'eau peut être amenée à circuler à la fois dans l'unité 10 ou dans le radiateur 8. L'unité 10 peut être alimentée à partir du fluide circulant vers le radiateur ou à partir du fluide en retour du radiateur.

En fonctionnement NOMINAL : 0% du fluide circule par l'unité 10 ; les vannes 16',18' sont fermées, tandis que par la première vanne, ouverte, jusqu'à 100% peut circuler par le radiateur 8, en sortie du moteur 2. L'ajustement du débit dans le radiateur, via la vanne 14', dépend de la charge thermique produite par le moteur 2 et donc de l'ouverture de cette vanne 14'.

En fonctionnement de CHARGE de l'unité 10 : le réglage de la première vanne 14' peut être ajusté en fonction de la température de sortie de l'unité 10 et du radiateur.

En fonctionnement DECHARGE de l'unité 10 : 0% du fluide circule par le radiateur, tandis que 100% de ce fluide provenant du moteur 2, et donc à refroidir, circule par le by-pass (branche de court-circuit) 22 du radiateur. La troisième vanne 18' est ouverte. Les deuxième et quatrième vannes sont fermées. Le contrôle de ces trois vannes donne une circulation à 100% par l'unité 10.

Ainsi, en fonctionnement NOMINAL et en sortie du moteur, le liquide passera dans la première vanne 14' et ensuite dans le radiateur, sans passer dans l'unité 10, la quatrième vanne 20' étant ouverte et les deuxième et troisième vannes 16',18' fermées.

En situation de charge de calories de l'unité et en sortie du moteur, le liquide passera au moins en partie dans la deuxième vanne 16' qui le dirigea vers l'unité 10, tandis qu'un passage à travers la première vanne 14' vers le radiateur et dans la deuxième branche 22 sera ajusté en fonction d'au moins un paramètre physique dans l'unité et dans le radiateur, après quoi le liquide retournera vers le moteur, la quatrième vanne 20' étant ouverte et la troisième vanne 16' fermée.

Enfin, lors d'une décharge de calories de l'unité 10, le liquide passera dans la première vanne 14' qui le dirigera exclusivement dans l'unité par la deuxième branche 22, sans passage dans le radiateur, la quatrième vanne 20' étant fermée. Après cela, le liquide retournera vers le moteur 2, la deuxième vanne 16' étant fermée et la troisième vanne 18 ouverte.

Comme paramètre physique pour ajuster le passage à travers la première vanne 14' en situation de charge, on recommande de choisir une température, de préférence la température de sortie du radiateur, qui pourra être relevée par une sonde 26 reliée au calculateur 28.

Ainsi, en particulier en fonctionnement nominal, la première vanne 14' répartira la circulation du liquide sortant du moteur 2 entre le radiateur et la deuxième branche 22, en fonction de cette donnée de température liée au radiateur.

Par ailleurs, comme indiqué ci-avant le montage suivant cette intégration en montage « parallèle » des figures 4-8 va permettre d'absorber la situation où, en fonctionnement nominal, un problème de puissance surviendra sur le radiateur 8, suite à une surcharge thermique détectée par une sonde de température, telle la sonde 26 (par exemple une température de plus de 75°C).

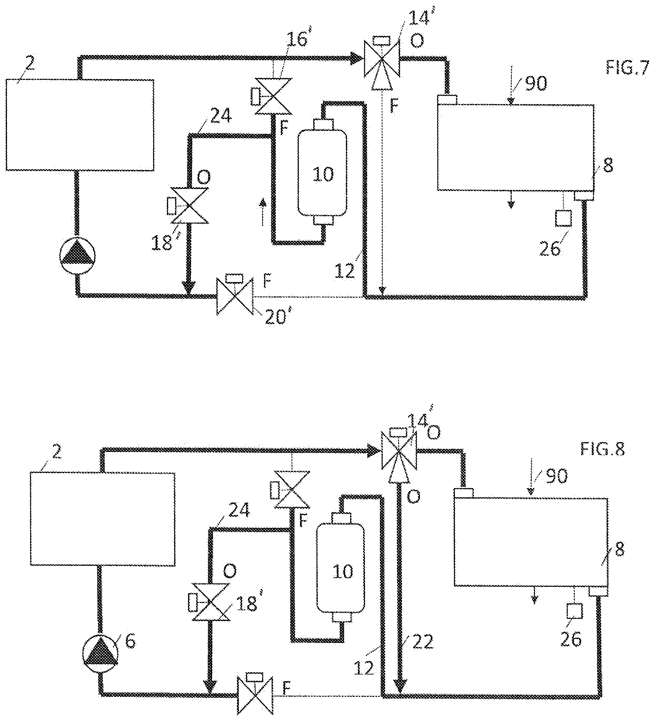

Dans ce cas, la quatrième vanne 20' se fermera et la troisième vanne 18' s'ouvrira, pour assurer alors une circulation du liquide dans l'unité 10 après passage dans le radiateur 8 (voir figure 7).

100% du débit pourra être de nouveau amené à circuler dans l'unité, où on pourrait alors prévoir des éléments MCP 13 dédiés, (complémentaires donc de ceux précités à température de fusion plus basse) ayant une température de fusion plus élevée que celle du(des) MCP(s) de la couche 15, par exemple une température de fusion de 90°C, au lieu des 70 / 75°C des autres éléments de la couche 15, permettent ainsi d'effacer un pic de température.

Ensuite, une fois que la sonde de température aura détecté la fin de la surcharge thermique (par exemple une température de moins de 70°C), la première vanne 14' répartira de nouveau la circulation du liquide sortant du moteur entre le radiateur 8 et ladite deuxième branche 22, tandis qu'elle avait dirigé le liquide exclusivement vers le radiateur 8, sans passage donc dans cette deuxième branche, après détection de la surcharge thermique par la sonde de température 26 (voir figure 8). Le fonctionnement nominal pourra alors être rétabli.

Concernant la constitution de l'unité 10, on peut se reporter aux exemples privilégiés des figures 9 à 11.

Le schéma de la figure 9 montre un dispositif thermique ou unité 10 où entre et d'où sort un fluide 9 (caloporteur dans l'application au circuit de refroidissement), sa circulation y étant assurée via des moyens de circulation 6, telle qu'une pompe.

Le stockeur-échangeur 10 de chaleur disposé sur le circuit 4 est donc une unité qui va emmagasiner de l'énergie thermique par changement(s) de phase d'au moins un matériau MCP, puis ultérieurement restituer une partie au moins de cette énergie par nouveau(x) changement(s) de phase (d'au moins certains) de ce(s) matériau(x) MCP.

L'unité 10 comprend donc un ou plusieurs modules 3 renfermant chacun un volume intérieur 7 où circule le fluide 9 et où sont disposés des éléments 13 de stockage et de restitution d'une énergie thermique, à matériau MCP, en contact avec le fluide, pour des échanges thermiques.

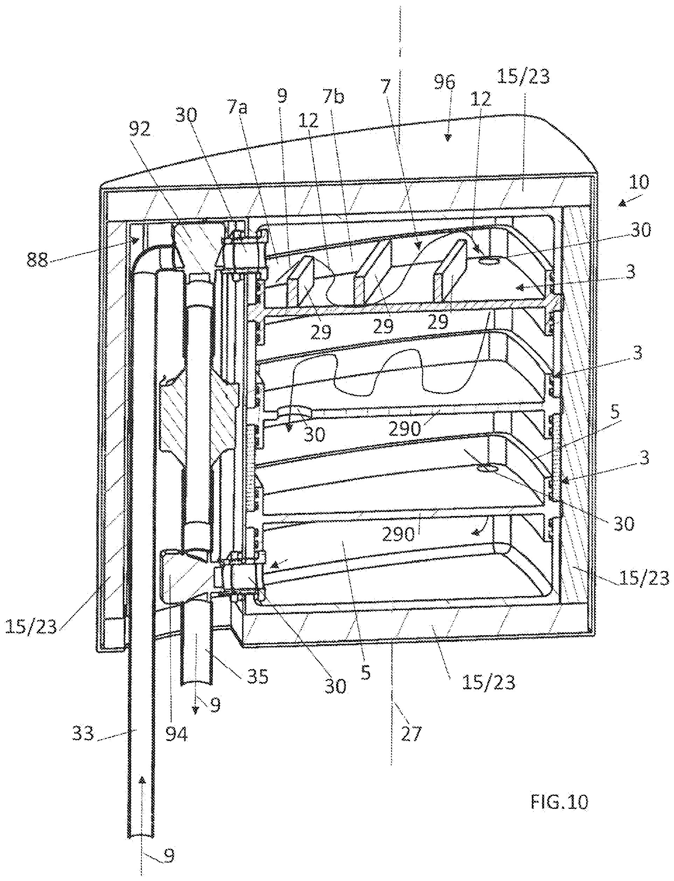

Comme le montre la figure 10, le(chaque) volume intérieur 7 sera favorablement pourvu de chicanes. Pour les définir, pourront être prévues, sur le chemin du fluide, une série de cloisons 29 :
- scindant le volume 7 en une succession de sous-volumes, tels 7a,7b,7c...où seront disposés, par lots, les éléments 13 autour et/ou dans lesquels le fluide circulera, en échanges thermiques,
- et présentant au moins un passage 30 de communication entre les sous-volumes.

Chaque module peut être ouvert en 31 et fermé par un fond 290.

Dans la direction 27 de superposition des modules 3, de part et d'autre de la pile qu'ils forment, un couvercle 32 fermera alors chaque ouverture 31 et pourra être doublé par une poche 34 à constitution PIV. Une plaque 36 de protection mécanique pourra fermer le tout, suivant l'axe 27, comme illustré. Des moyens 40 de fixation, qui peuvent être des tirants, fixent ici mécaniquement ensemble les modules, suivant l'axe 27.

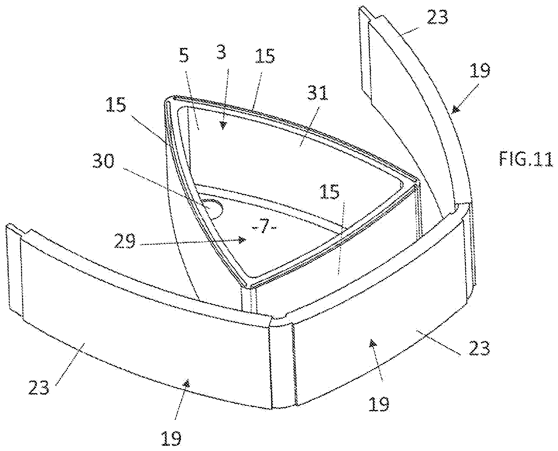

Pour la lisibilité des figures, les figures 10,11 ne montrent pas les éléments 13. On les voit figure 9. Ce peut être des sphères ou des ovoïdes.

La figure 10 permet de comprendre que les chicanes 12 peuvent être formées par le fait que les cloisons 29 sont ici des fonds de corps ou modules 3 qui sont disposés en ligne (direction 27), les uns à la suite des autres, en communication deux à deux par un passage 30 ménagé dans chaque fond 29.

Chaque module 3 est constitué d'une paroi périphérique latérale 5 que complète le fond percé 290. Chaque paroi transversale 290 et son passage traversant 30 forment ainsi un ralentisseur à la libre circulation du fluide entre son entrée 33 et sa sortie 35. De préférence, deux passages 30 de modules successifs seront décalés latéralement, par rapport à l'axe 27 comme schématisé. A l'opposé du fond, chaque module est ouvert, en 31, de sorte que, sortant d'un passage 30, le fluide arrive directement dans le volume interne du module adjacent. La circulation dans l'unité, entre les sous-volumes, peut être en série ou en parallèle.

Autour des modules est encore disposé un boîtier 96 (ici fermé sur toutes les faces) qui assure une protection mécanique et les réunit ensemble. L'unité 10 pourrait ne comprendre qu'un seul module 3. Chaque module de la figure 9 peut être celui des figures 10 ou 11 complété par les éléments 13.

Dans un module de la solution de la figure 10, les chicanes 12 sont (essentiellement) créées par les cloisons internes 29 qui, à l'intérieur de l'espace 7 délimité par la paroi périphérique 5 et le fond percé 290, scindent cet espace en sous-volumes 7a,...7c. Chaque cloison 29 s'interrompant à l'une de ses extrémités latérales avant d'atteindre la paroi 5, c'est là qu'est défini l'un des passages 30 qui, en liaison avec la cloison concernée et de préférence une alternance dans l'extrémité latérale ainsi ouverte, crée une chicane. Les flèches de la figure 10 montrent le fluide qui serpente.

Dans chaque cas, en tant que constitution des éléments 13, on pourra prévoir une composition de caoutchouc telle que décrite dans EP2690137 ou dans EP2690141, à savoir dans le second cas une composition réticulée à base d'au moins un élastomère silicone « RTV » vulcanisé à température ambiante et comprenant au moins un matériau à changement de phase (MCP), ledit au moins un élastomère silicone présentant une viscosité mesurée à 25°C selon la norme ISO 3219 qui est inférieure ou égale à 5000 mPa.s. Le matériau à changement de phase (MCP) thermique pourra être constitué de n-hexadécane, d'eicosane ou d'un sel de lithium, tous présentant des points de fusion inférieurs à 40° C. En alternative, le matériau MCP pourrait être à base d'acide gras, de paraffine, ou de sel eutectique ou hydraté, ou encore d'alcools gras, par exemple.

Autour du/de chaque volume 7, une barrière thermique active (15/23) assure une isolation thermique vis-à-vis de l'extérieur et au moins une fonction de retardateur dans la transmission de l'énergie thermique entre l'intérieur et l'extérieur de l'unité.

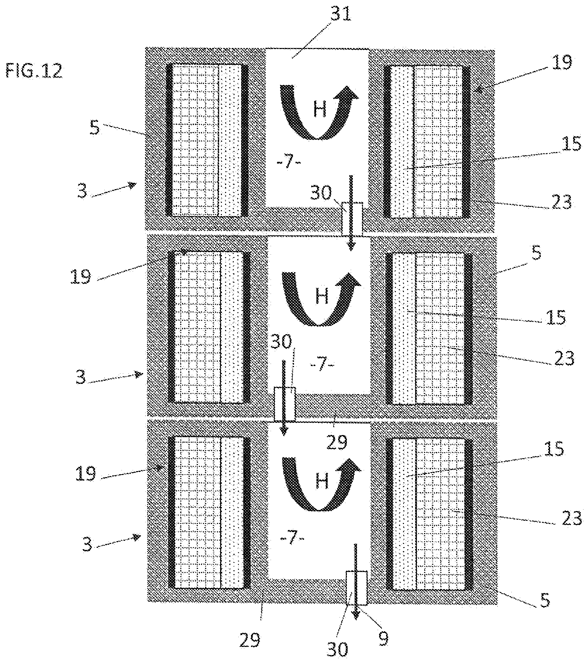

Cette barrière thermique active sera :
- soit intégrée en tout ou partie à la paroi périphérique latérale 5 (comme figure 12, pour les deux couches 15/23 noyée de moulage dans la paroi, ou figure 11 où la couche 15 est disposée dans des fentes de la paroi),
- soit disposée autour de la paroi 5 (figures 9,10 et aussi 11 pour la couche 23)

La barrière comprendra donc au moins une première couche 15 contenant un matériau MCP et une seconde couche 23 contenant un matériau isolant thermique. A priori la seconde couche 23 sera disposée autour de la première couche 15.

La barrière thermique est sensible aux échanges thermiques dans le volume global 7, mais n'a, selon l'invention, aucun contact physique avec le liquide 9 (qui circule au milieu des éléments à matériau MCP 13). Une partie au moins de l'épaisseur de la paroi périphérique 5 les sépare.

Afin d'optimiser l'efficacité thermique de la barrière active, il est conseillé qu'elle comprenne au moins un panneau PIV formant une poche 19 sous vide où sera disposée au moins la seconde couche 23, laquelle coexistera de préférence avec la couche à matériau MCP 15 au sein d'une même enveloppe étanche.

La ou les feuilles ou film(s) constituant chaque poche pourront typiquement être réalisés comme un film multicouche comportant des films polymère (PE et PET) et de l'aluminium sous forme par exemple laminée (feuille d'épaisseur de l'ordre d'une dizaine de micromètre) ou métallisée (dépôt sous vide d'un film de quelques dizaines de nanomètre).

Le matériau de la couche 23 se composera favorablement (s'il y a un vide d'air à réaliser) d'un matériau poreux, tel une poudre de silice ou un aérogel, confiné dans un feuille déformable ou conformable qui ne laissera passer ni la vapeur d'eau ni les gaz. Le PIV obtenu sera vidé de son air pour obtenir par exemple une pression de quelques millibars, puis pourra être scellé. Typiquement, la conductivité thermique À d'un tel PIV sera de 0.004/0,008 W/m.K. Des exemples, pouvant ici s'appliquer, de panneau PIV et de matériau super-isolant sont fournis dans PCT/FR2014/050267 et dans WO2014060906 (matériau poreux), respectivement.

Les solutions présentées ci-avant permettront favorablement, dans un volume et poids acceptables notamment par des constructeurs aéronautiques ou automobiles, un stockage rapide d'une énergie thermique disponible au bout d'environ 6-10 minutes, le maintien de cette énergie pendant 12 à 15 heures, avant sa restitution rapide, typiquement quelques minutes (en particulier moins de 2/3).

## Revendications

1. Système de gestion de température sur un circuit de refroidissement d'un véhicule par un liquide caloporteur (9), le circuit comprenant un chemin de circulation du liquide caloporteur et, disposés sur le chemin :
- en série, un moyen (6) de mise en circulation du liquide caloporteur sur le chemin, un moteur (2) de déplacement du véhicule, dont des organes sont à placer en échange thermique avec le liquide caloporteur, et un échangeur de chaleur (8) présentant une entrée et une sortie pour ledit liquide caloporteur afin d'y placer ce liquide caloporteur en échange thermique avec un autre fluide,
- montée sur une première branche (12), entre l'entrée et la sortie de l'échangeur de chaleur (8), un accumulateur de chaleur (10) où peut entrer et d'où peut sortir ledit liquide caloporteur (9),
- et des vannes (14,16,18 ;14',16',18',20') placées pour que du liquide caloporteur arrivant du moteur circule vers l'échangeur de chaleur (8) et/ou l'accumulateur de chaleur, l'accumulateur de chaleur (10) étant une unité de stockage par chaleur latente et de restitution d'énergie thermique qui contient au moins un volume (7) :
-- renfermant des éléments (13), à matériau à changement de phase (MCP), de stockage et de restitution d'une énergie thermique contenue dans ledit liquide caloporteur (9) pour un échange thermique avec ce liquide caloporteur (9),
-- et autour duquel est disposée une barrière thermique comprenant au moins une première couche (15) contenant un matériau à changement de phase et qui est entourée par une seconde couche (23) contenant un matériau isolant thermique poreux, pour isoler thermiquement de l'extérieur ledit volume (7),
**caractérisé en ce que** ladite barrière thermique n'a aucun contact physique avec le liquide caloporteur (9) circulant au milieu des éléments à matériau à changement de phase (13), une partie au moins de l'épaisseur d'une paroi périphérique (5) les séparant, et certains au moins desdits éléments (13) à matériau à changement de phase ont une température de fusion inférieure ou égale à la température de fusion du matériau à changement de phase de ladite première couche (15).

2. Système selon la revendication 1, où les vannes (14,16,18 ;14',16',18',20') sont placées sur le circuit de telle sorte que :
- en fonctionnement nominal, ledit liquide caloporteur (9) arrivant du moteur (2) peut passer dans l'échangeur de chaleur (8) sans passer dans l'unité (10) puis retourner au moteur,
- en situation de charge de calories dans lesdits éléments (13) à matériau à changement de phase de l'unité (10), du liquide caloporteur arrivant du moteur (2) peut passer au moins en partie dans ladite unité (10) et dans l'échangeur de chaleur (8) puis retourner au moteur,
- et, dans une situation de décharge de calories par lesdits éléments (13) à matériau à changement de phase de l'unité (10), du liquide caloporteur arrivant du moteur (2) peut passer dans l'unité (10) sans passer dans l'échangeur de chaleur (8) puis retourner au moteur.

3. Système selon l'une des revendications précédentes, où les vannes (14,16,18) comprennent :
- une première vanne trois voies (14) placée pour faire circuler le liquide caloporteur (9) soit vers l'échangeur de chaleur (8) soit vers ladite unité (10),
- une deuxième vanne deux voies (16) placée pour autoriser en état ouvert, et interdire en état fermé, la circulation du liquide caloporteur dans l'échangeur de chaleur,
- et une troisième vanne deux voies (18) placée pour :
-- dans ladite situation de charge de calories de l'unité (10), faire circuler du liquide caloporteur provenant du moteur dans l'unité en fermant un retour vers le moteur court-circuitant l'échangeur de chaleur (8),
-- et, dans ladite situation de décharge de calories de l'unité, faire circuler vers le moteur du liquide caloporteur provenant de l'unité.

4. Système selon l'une des revendications 1 ou 2, où :
- les vannes (14',16',18',20') comprennent une première vanne trois voies (14'), et des deuxième, troisième et quatrième vannes deux voies (16',18',20'),
- le branchement de l'unité (10) vers la sortie de l'échangeur de chaleur (8) est, par rapport à la circulation du liquide caloporteur (9), situé en aval d'une deuxième branche (22) du chemin de circulation qui :
-- est raccordée à la première vanne, laquelle est placée pour répartir la circulation du liquide caloporteur sortant du moteur (2) entre l'échangeur de chaleur et ladite deuxième branche (22),
-- et débouche en aval de l'échangeur de chaleur pour permettre de le court-circuiter quand la première vanne (14) est fermée vers l'échangeur de chaleur et ouverte vers cette deuxième branche,
- le branchement de l'unité (10) vers l'entrée de l'échangeur de chaleur est, par rapport à la circulation du liquide caloporteur, situé en amont de la première vanne et comprend la deuxième vanne (16') placée sur la première branche (12) pour :
-- autoriser en état ouvert la circulation du liquide caloporteur dans l'unité, dans un état ouvert de la première vanne,
-- et interdire en état fermé, un retour vers la première vanne de liquide caloporteur sortant de l'unité (10),
- une troisième branche (24) du chemin de circulation comprend la troisième vanne (18') et est branchée, sur la première branche (12), entre la deuxième vanne (16') et ladite unité (10),
- et la première branche (12) permet, dans un état fermé de la troisième vanne (18') et ouvert de la deuxième vanne (16'), et en situation de charge de calories de l'unité (10), de faire circuler le liquide caloporteur sortant de la deuxième vanne vers l'unité, la troisième vanne (18) interdisant, dans un état fermé, un retour de liquide caloporteur vers le moteur par ladite troisième branche (24) sans passage à travers l'unité (10) et, dans un état ouvert, autorisant un retour de liquide caloporteur vers le moteur, quand la quatrième vanne (20) est fermée, la quatrième vanne (20') étant placée pour :
-- autoriser, en état ouvert, un tel retour du liquide caloporteur, après son passage dans l'unité (10), dans la situation de charge de calories de ladite unité,
-- et interdire, en état fermé, un retour vers l'échangeur de chaleur (8) du liquide caloporteur provenant de la troisième branche (24).

5. Système selon l'une des revendications précédentes, où le volume de ladite unité (10) est pourvu de chicanes (12) pour faire serpenter le liquide caloporteur (9).

6. Système selon l'une des revendications précédentes, où l'unité renferme, sur le chemin du liquide caloporteur (9), une série de cloisons (29) :
- scindant le volume en une succession de sous-volumes (7a,7b...) où sont disposés, par lots, lesdits éléments (13) de stockage et de restitution ultérieure de l'énergie thermique,
- et présentant au moins un passage (30) de communication entre les sous-volumes.

7. Système selon l'une des revendications précédentes, où au moins la seconde couche contenant le matériau isolant thermique (23) est contenue dans au moins une poche (19) étanche audit matériau et à l'air pour que, un vide d'air correspondant à une pression comprise entre 10 et 10⁴ Pa étant établi dans ladite poche, un panneau isolant sous vide soit constitué.

8. Système selon l'une des revendications précédentes, où ladite paroi périphérique (5) est en un matériau polymère moulable et limite latéralement le ou chaque volume (7) ; et les première et seconde couches (15,23) sont disposées dans ladite paroi périphérique (5).

9. Système selon la revendication 6, seule ou en combinaison avec l'une des revendications 7,8, où :
- l'unité (10) comprend plusieurs modules (3) adjacents distincts structurellement, empilés suivant un axe (27) et contenant chacun un sous-volumes (7a,7b...),
- et certains au moins des modules comprennent individuellement un fond (290) séparant deux modules adjacents transversalement audit axe, chaque fond correspondant à une dite cloison où ledit au moins un passage (30) de communication laisse entrer et sortir le liquide caloporteur (9), les passages étant suivant l'axe décalés latéralement les uns par rapport aux autres.

10. Système selon l'une des revendications précédentes, où :
- ledit au moins un volume (7) est délimité par la paroi périphérique (5),
- lesdits éléments (13) à matériau à changement de phase sont disposables par lots dans ledit au moins un volume (7),
- et la barrière thermique active est :
-- soit intégrée en tout ou partie à la paroi périphérique (5),
-- soit disposée autour de la paroi périphérique (5).

11. Procédé de mise en œuvre d'un système selon l'une des revendications précédentes, de telle sorte que :
- en fonctionnement nominal, du liquide caloporteur (9) sorti du moteur (2) passe totalement dans l'échangeur de chaleur (8), sans que ledit liquide caloporteur passe dans l'unité (10),
- et en situation de charge de calories par les éléments (13) à matériau à changement de phase de l'unité (10), du liquide caloporteur sorti du moteur passe totalement dans l'unité après quoi le liquide caloporteur passe dans l'échangeur de chaleur (8) puis retourne au moteur.

12. Procédé selon la revendication 11 où, après avoir établi dans le circuit ladite situation de charge de calories, on y établit une situation de décharge de calories contenues dans les éléments (13) à matériau à changement de phase de l'unité (10), en faisant passer totalement du liquide caloporteur sorti du moteur dans ladite unité, puis on fait retourner ledit liquide caloporteur vers le moteur (2).

13. Procédé de mise en œuvre d'un système selon la revendication 4, où :
- en fonctionnement nominal, du liquide caloporteur (9) sorti du moteur passe dans la première vanne (14') et ensuite dans l'échangeur de chaleur, sans passer dans l'unité (10) ni dans les deuxième et troisième vannes (16',18'), alors fermées, la quatrième vanne (20') étant ouverte,
- en situation de charge de calories de l'unité (10'), du liquide caloporteur sorti du moteur passe au moins en partie dans la deuxième vanne (16') qui le dirige vers l'unité, tandis qu'un passage à travers la première vanne (18') vers le l'échangeur de chaleur et dans la deuxième branche (22) est ajusté en fonction d'au moins un paramètre physique dans l'unité ou dans l'échangeur de chaleur, après quoi le liquide caloporteur retourne vers le moteur, la quatrième vanne (20') étant ouverte et la troisième vanne fermée,
- en situation de décharge de calories de l'unité, du liquide caloporteur sorti du moteur passe dans la première vanne (14') qui le dirige exclusivement dans l'unité par la deuxième branche (22), sans passage dans l'échangeur de chaleur (8), la quatrième vanne étant fermée, après quoi le liquide caloporteur retourne vers le moteur, la deuxième vanne (16') étant fermée et la troisième vanne ouverte.

14. Procédé selon la revendication 13, où :
- ledit paramètre physique est une température, et
- en fonctionnement nominal, la première vanne (14') répartit la circulation dudit liquide caloporteur entre le l'échangeur de chaleur et ladite deuxième branche (22) en fonction d'une donnée de température liée à l'échangeur de chaleur.

15. Procédé selon la revendication 14 où, en fonctionnement nominal, si un problème de puissance survient sur l'échangeur de chaleur (8) due à une surcharge thermique détectée par une sonde de température (26), la quatrième vanne (20') se ferme et la troisième vanne (18') s'ouvre, pour assurer une circulation du liquide caloporteur dans l'unité (10) après passage dans le l'échangeur de chaleur, puis, une fois que la sonde de température détecte une fin de la surcharge thermique, la première vanne (14') répartit de nouveau la circulation dudit liquide caloporteur entre le l'échangeur de chaleur et ladite deuxième branche, alors que ladite première vanne (14') avait dirigé le liquide caloporteur totalement vers le l'échangeur de chaleur, sans passage dans la deuxième branche (22), après détection de la surcharge thermique par la sonde de température (26).

## Patentansprüche

1. System zum Temperaturmanagement an einem Kühlkreislauf eines Fahrzeugs mittels einer Wärmeträgerflüssigkeit (9), wobei der Kreislauf einen Flüssigkeitszirkulationspfad aufweist und auf dem Pfad angeordnet enthält:
- in Reihe eine Einrichtung (6) zum Umwälzen der Flüssigkeit auf dem Pfad, einen Motor (2) zum Fortbewegen des Fahrzeugs, von dem Teile mit der Wärmeträgerflüssigkeit in Wärmeaustausch gebracht werden sollen, und einen Wärmetauscher (8) mit einem Einlass und einem Auslass für die Wärmeträgerflüssigkeit, um darin diese Wärmeträgerflüssigkeit mit einer anderen Flüssigkeit in Wärmeaustausch zu bringen,
- an einem ersten Abzweig (12) zwischen dem Einlass und dem Auslass des Wärmetauschers (8) montiert einen Wärmespeicher (10), in den die Wärmeträgerflüssigkeit (9) einströmen und daraus ausströmen kann,
- und Ventile (14, 16, 18; 14', 16', 18', 20'), die dazu angeordnet sind, dass die vom Motor kommende Wärmeträgerflüssigkeit (9) zum Wärmetauscher (8) und/oder Wärmespeicher strömt, wobei der Wärmespeicher (10) eine Latentwärmespeicher- und Wärmeenergiefreisetzungseinheit ist, die zumindest einen Raum (7) enthält, der
-- Elemente (13) aus Phasenwechselmaterial (PCM) zur Speicherung und Freisetzung von Wärmeenergie einschließt, die in der Wärmeträgerflüssigkeit (9) enthalten ist, für einen Wärmeaustausch mit dieser Wärmeträgerflüssigkeit,
-- und um den herum eine Wärmesperre angeordnet ist, enthaltend zumindest eine erste Schicht (15), die ein Phasenwechselmaterial enthält und die von einer zweiten Schicht (23) umgeben ist, die ein poröses Wärmeisoliermaterial enthält, um den Raum (7) von außen thermisch zu isolieren,
**dadurch gekennzeichnet, dass** die Wärmesperre keinen physischen Kontakt mit der Wärmeträgerflüssigkeit (9) hat, die in der Mitte der Elemente (13) aus Phasenwechselmaterial zirkuliert, wobei zumindest ein Teil der Dicke einer Umfangswand (5) diese trennt und zumindest einige der Elemente (13) aus Phasenwechselmaterial eine Schmelztemperatur aufweisen, die geringer oder gleich der Schmelztemperatur des Phasenwechselmaterials der ersten Schicht (15) ist.

2. System nach Anspruch 1, wobei die Ventile (14, 16, 18; 14', 16', 18', 20') so an dem Kreislauf angeordnet sind, dass
- im Nennbetrieb die vom Motor (2) kommende Flüssigkeit in den Wärmetauscher (8) strömen kann, ohne in die Einheit (10) zu strömen, dann zum Motor zurückströmen kann,
- in einer Wärmelastsituation in den Phasenwechselelementen (13) der Einheit (10) die vom Motor (2) kommende Wärmeträgerflüssigkeit (9) zumindest teilweise in die Einheit (10) und in den Wärmetauscher (8) strömen und dann zum Motor zurückströmen kann,
- und in einer Situation der Wärmeentlastung durch die Phasenwechselelemente (13) der Einheit (10) die vom Motor (2) kommende Wärmeträgerflüssigkeit (9) in die Einheit (10) strömen kann, ohne in den Wärmetauscher (8) zu strömen, und dann zum Motor zurückströmen kann.

3. System nach einem der vorangehenden Ansprüche, wobei die Ventile (14, 16, 18) enthalten:
- ein erstes Dreiwegeventil (14), das dazu angeordnet ist, die Wärmeträgerflüssigkeit (9) entweder zum Wärmetauscher (8) oder zur Einheit (10) strömen zu lassen,
- ein zweites Zweiwegeventil (16), das dazu angeordnet ist, die Zirkulation der Wärmeträgerflüssigkeit (9) in den Wärmetauscher im offenen Zustand zu gestatten bzw. im geschlossenen Zustand zu unterbinden,
- und ein drittes Zweiwegventil (18), das dazu angeordnet ist,
-- in der Wärmelastsituation der Einheit (10) die vom Motor (2) kommende Wärmeträgerflüssigkeit (9) in die Einheit (10) strömen zu lassen, indem ein Rücklauf zum Motor geschlossen wird, wodurch der Wärmetauscher (8) kurzgeschlossen wird,
-- und in der Wärmeentlastungssituation der Einheit die von der Einheit kommende Wärmeträgerflüssigkeit (9) zum Motor strömen zu lassen.

4. System nach einem der Ansprüche 1 oder 2, wobei
- die Ventile (14', 16', 18', 20') ein erstes Dreiwegeventil (14') und ein zweites, drittes und viertes Zweiwegeventil (16', 18', 20') enthalten,
- der Anschluss der Einheit (10) an den Auslass des Wärmetauschers (8) bezogen auf die Zirkulation der Wärmeträgerflüssigkeit (9) stromabwärts eines zweiten Abzweigs (22) des Zirkulationspfads liegt, der
-- an das erste Ventil angeschlossen ist, das dazu angeordnet ist, die Zirkulation der aus dem Motor (2) ausströmenden Wärmeträgerflüssigkeit zwischen dem Wärmetauscher und dem zweiten Abzweig (22) zu verteilen,
-- und stromabwärts des Wärmetauschers mündet, damit dieser kurzgeschlossen werden kann, wenn das erste Ventil (14) zum Wärmetauscher hin geschlossen und zu diesem zweiten Abzweig hin geöffnet ist,
- der Anschluss der Einheit (10) an den Einlass des Wärmetauschers bezogen auf die Zirkulation der Wärmeträgerflüssigkeit (9) stromaufwärts des ersten Ventils liegt und das zweite Ventil (16') enthält, das am ersten Abzweig (12) angeordnet ist, um
-- im offenen Zustand die Zirkulation der Wärmeträgerflüssigkeit (9) in die Einheit in einem offenen Zustand des ersten Ventils zu gestatten,
-- und im geschlossenen Zustand einen Rücklauf der aus der Einheit (10) ausströmenden Wärmeträgerflüssigkeit (9) zum ersten Ventil hin zu unterbinden,
- ein dritter Abzweig (24) des Zirkulationspfads das dritte Ventil (18') enthält und zwischen dem zweiten Ventil (16') und der Einheit (10) an den ersten Abzweig (12) angeschlossen ist,
- der erste Abzweig (12) gestattet, in einem geschlossenen Zustand des dritten Ventils (18') und in einem offenen Zustand des zweiten Ventils (16') und in Wärmelastsituation der Einheit (10) die aus dem zweiten Ventil ausströmende Wärmeträgerflüssigkeit (9) zur Einheit strömen zu lassen, wobei das dritte Ventil (18) in einem geschlossenen Zustand einen Rücklauf der Wärmeträgerflüssigkeit (9) zum Motor über den dritten Abzweig (24) ohne Durchströmen der Einheit (10) unterbindet und in einem offenen Zustand einen Rücklauf der Wärmeträgerflüssigkeit (9) zum Motor gestattet, wenn das vierte Ventil (20) geschlossen ist, wobei das vierte Ventil (20') dazu angeordnet ist, um
-- im offenen Zustand einen solchen Rücklauf der Wärmeträgerflüssigkeit (9) nach deren Strömen in die Einheit (10) in der Wärmelastsituation der Einheit zu gestatten,
-- und im geschlossenen Zustand einen Rücklauf der von dem dritten Abzweig (24) kommenden Wärmeträgerflüssigkeit zum Wärmetauscher (8) zu unterbinden.

5. System nach einem der vorangehenden Ansprüche, wobei der Raum der Einheit (10) mit Blenden (12) versehen ist, um die Wärmeträgerflüssigkeit (9) hindurch schlängeln zu lassen.

6. System nach einem der vorangehenden Ansprüche, wobei die Einheit auf dem Pfad der Wärmeträgerflüssigkeit (9) eine Reihe von Trennwänden (29) umschließt, die
- den Raum in eine Abfolge von Unterräumen (7a, 7b ...) spaltet, in denen die Elemente (13) zum Speichern und späteren Freisetzen der Wärmeenergie gruppenweise angeordnet sind,
- und zumindest einen Verbindungsdurchlass (30) zwischen den Unterräumen aufweisen.

7. System nach einem der vorangehenden Ansprüche, wobei zumindest die zweite Schicht, die das wärmeisolierende Material (23) enthält, in zumindest einer gegenüber dem Material und gegenüber Luft abgedichteten Tasche (19) enthalten ist, damit bei einem in der Tasche aufgebauten Luftvakuum, das einem Druck zwischen 10 und 10⁴ Pa entspricht, eine unter Vakuum isolierende Platte gebildet wird.

8. System nach einem der vorangehenden Ansprüche, wobei die Umfangswand (5) aus einem formbaren Polymermaterial besteht und den bzw. jeden Raum (7) seitlich eingrenzt; wobei die erste und die zweite Schicht (15, 23) in der Umfangswand (5) angeordnet sind.

9. System nach Anspruch 6 für sich genommen oder in Kombination mit einem der Ansprüche 7, 8, wobei
- die Einheit (10) mehrere strukturell getrennte, aneinandergrenzende Module (3) enthält, die entlang einer Achse (27) gestapelt sind und jeweils einen Unterraum (7a, 7b ...) enthalten,
- und zumindest einige der Module einzeln einen Boden (290) enthalten, der zwei aneinandergrenzende Module quer zur Achse trennt, wobei jeder Boden einer Trennwand entspricht, wobei der zumindest eine Verbindungsdurchlass (30) die Flüssigkeit (9) ein- und ausströmen lässt, wobei die Durchlässe entlang der Achse seitlich zueinander versetzt liegen.

10. System nach einem der vorangehenden Ansprüche, wobei
- der zumindest eine Raum (7) von der Umfangswand (5) begrenzt wird,
- die Elemente (13) aus Phasenwechselmaterial in dem zumindest einen Raum (7) gruppenweise anordenbar sind,
- und die aktive Wärmesperre
-- entweder vollständig oder teilweise der Umfangswand (5) integriert ist,
-- oder um die Umfangswand (5) herum angeordnet ist.

11. Verfahren zum Betreiben eines Systems nach einem der vorangehenden Ansprüche, derart, dass
- im Nennbetrieb die vom Motor (2) ausgeströmte Flüssigkeit vollständig in den Wärmetauscher (8) strömt, ohne dass die Flüssigkeit in die Einheit (10) strömt,
- und in einer Situation der Wärmebelastung durch die Elemente (13) aus Phasenwechselmaterial der Einheit (10) die vom Motor ausgeströmte Flüssigkeit vollständig in die Einheit strömt, wonach die Flüssigkeit in den Wärmetauscher (8) strömt und dann zum Motor zurückströmt.

12. Verfahren nach Anspruch 11, wobei nach Auftreten der Wärmelastsituation in dem Kreislauf eine Situation der Entlastung der Wärme, die in den Elementen (13) aus Phasenwechselmaterial der Einheit (10) enthalten ist, hergestellt wird, indem die aus dem Motor ausgeströmte Flüssigkeit vollständig in die Einheit geführt wird, wonach die Flüssigkeit zum Motor (2) zurückgeführt wird.

13. Verfahren zum Betreiben eines Systems nach Anspruch 4, wobei
- im Nennbetrieb die vom Motor ausgeströmte Flüssigkeit (9) in das erste Ventil (14') und dann in den Wärmetauscher strömt, ohne in die Einheit (10) noch in das zweite und dritte Ventil (16', 18') zu strömen, die dann geschlossen sind, während das vierte Ventil (20') geöffnet ist,
- in einer Wärmelastsituation der Einheit (10) die vom Motor ausgeströmte Flüssigkeit zumindest teilweise in das zweite Ventil (16') strömt, das sie zur Einheit leitet, während ein Durchlass durch das erste Ventil (18)' zum Wärmetauscher und in den zweiten Abzweig (22) in Abhängigkeit von zumindest einem physikalischen Parameter in der Einheit oder in dem Wärmetauscher abgestimmt wird, wonach die Flüssigkeit zum Motor zurückströmt, wobei das vierte Ventil (20') offen ist und das dritte Ventil geschlossen ist,
- in einer Wärmeentlastungssituation der Einheit die vom Motor ausgeströmte Flüssigkeit in das erste Ventil (14') strömt, das sie über den zweiten Abzweig (22) ausschließlich in die Einheit leitet, ohne in den Wärmetauscher (8) zu strömen, wobei das vierte Ventil geschlossen ist, wonach die Flüssigkeit zum Motor zurückströmt, wobei das zweite Ventil (16') geschlossen ist und das dritte Ventil offen ist.

14. Verfahren nach Anspruch 13, wobei
- der physikalische Parameter eine Temperatur ist und
- im Nennbetrieb das erste Ventil (14') die Zirkulation der Flüssigkeit zwischen dem Wärmetauscher und dem zweiten Abzweig (22) in Abhängigkeit von einer mit dem Wärmetauscher verbundenen Temperaturvorgabe verteilt.

15. Verfahren nach Anspruch 14, wobei im Nennbetrieb bei Auftreten eines Leistungsproblems am Wärmetauscher (8) aufgrund von einer thermischen Überlastung, die von einer Temperatursonde (26) erfasst wird, das vierte Ventil (20') schließt und das dritte Ventil (18') öffnet, um eine Zirkulation der Flüssigkeit in die Einheit (10) nach Einströmen in den Wärmetauscher sicherzustellen, wobei dann nach Erfassen einer Beendigung der Wärmeüberlastung durch die Temperatursonde das erste Ventil (14') erneut die Zirkulation der Flüssigkeit zwischen dem Wärmetauscher und dem zweiten Abzweig verteilt, während nach Erfassen der Wärmeüberlastung durch die Temperatursonde (26) das erste Ventil (14') die Flüssigkeit vollständig zum Wärmetauscher geleitet hatte, ohne in den zweiten Abzweig (22) einzuströmen.

## Claims

1. A temperature management system on a vehicle cooling circuit using a heat transfer liquid (9), the circuit comprising a path for circulating the heat transfer liquid and, arranged on the path :
- in series, a means (6) for circulating the heat transfer liquid along the path, an engine (2) for moving the vehicle, whose components are to be placed in a heat exchange relationship with the heat transfer liquid, and a heat exchanger (8) having an inlet and an outlet for said heat transfer liquid in order to place said heat transfer liquid in a heat exchange relationship with another fluid within the exchanger,
- mounted on a first branch (12), between the inlet and the outlet of the heat exchanger (8), a heat store (10) into which said heat transfer liquid (9) can enter and from which it can exit,
- and valves (14, 16, 18; 14', 16', 18', 20') positioned so that heat transfer liquid arriving from the engine flows toward the heat exchanger (8) and/or the heat store, the heat store (10) being a latent heat storage and thermal energy release unit containing at least one volume (7):
-- enclosing elements (13) made of phase change material (PCM) for storing and releasing the thermal energy contained in said heat transfer liquid (9) in view of a heat exchange with this heat transfer liquid (9),
-- and around which is installed a thermal barrier comprising at least one first layer (15) containing a phase change material and which is surrounded by one second layer (23) containing a porous thermally insulating material to thermally isolate said volume (7) from the outside,
**characterized in that** said thermal barrier has no physical contact with the heat transfer liquid (9) circulating within the elements made of phase change material (13), where at least part of the thickness of a peripheral wall (5) separates them, and at least some of said elements (13) made of phase change material have a melting temperature that is lower than or equal to the melting temperature of the phase-change material of said first layer (15).

2. The system of claim 1, wherein the valves (14, 16, 18; 14', 16', 18', 20') are positioned on the circuit in such a way that:
- in a nominal mode, said heat transfer liquid arriving from the engine (2) can flow into the heat exchanger (8) without flowing into the unit (10) and then return to the engine,
- when the unit (10) is in a state where calories are charged in said elements (13) made of phase change material, heat transfer liquid arriving from the engine (2) can at least partly flow into said unit (10) and into the heat exchanger (8) and then return to the engine,
- and when the unit (10) is in a state where calories are discharged through said elements (13) made of phase change material, heat transfer liquid arriving from the engine (2) can flow into the unit (10) without flowing through the heat exchanger (8) and then return to the engine.

3. The system of one of the preceding claims, wherein the valves (14, 16, 18) comprise the following:
- a first three-way valve (14) so positioned as to circulate the heat transfer liquid (9) either toward the heat exchanger (8) or toward said unit (10),
- a second two-way valve (16) so positioned as to allow the heat transfer liquid to circulate in the heat exchanger when it is open and prevent it from circulating therein when it is closed,
- and a third two-way valve (18) so positioned as to:
-- when the unit (10) is in said calorie-charging state, circulate the heat transfer liquid coming from the engine into the unit by closing any return to the engine thus bypassing the heat exchanger (8),
-- and, when the unit is in said calorie-discharging state, circulate the heat transfer liquid coming from the unit toward the engine.

4. The system according to one of the claims 1 or 2, wherein:
- the valves (14', 16', 18', 20') comprise a first three-way valve (14') and second, third and fourth two-way valves (16', 18', 20'),
- with respect to the circulation of the heat transfer liquid (9), the connection of the unit (10) to the outlet of the heat exchanger (8) is located downstream of a second branch (22) of the circulation path, which:
-- is connected to the first valve, which is so positioned as to share the flow of heat transfer liquid coming out of the engine (2) between the heat exchanger and said second branch (22),
-- and opens downstream of the heat exchanger to allow for it to be bypassed when the first valve (14) is closed toward the heat exchanger and open toward the second branch,
- with respect to the circulation of the heat transfer liquid, the connection of the unit (10) toward the inlet of the heat exchanger is located upstream of the first valve and includes the second valve (16') so positioned on the first branch (12) as to:
-- when it is in the open state, allow the heat transfer liquid to circulate into the unit, when the first valve is in an open state,
-- and, when it is in the closed state, prevent the heat transfer liquid coming out of the unit (10) from returning to the first valve,
- a third branch (24) of the circulation path includes the third valve (18') and is connected between the second valve (16') and said unit (10) on the first branch (12),
- and, when the third valve (18') is in a closed state and the second valve (16') is in an open state and when the unit (10) is in a calorie-charging state, the first branch (12) allows for the heat transfer liquid coming out of the second valve to be circulated toward the unit, the third valve (18) preventing, when it is in a closed state, the heat transfer liquid from returning toward the engine through said third branch (24) without flowing through the unit (10) and, when it is in an open state, allowing heat transfer liquid to return to the engine, when the fourth valve (20) is closed, the fourth valve (20') being so positioned as to:
-- when it is in the open state, allow the heat transfer liquid to return in this way after its passage through the unit (10), when said unit is in the calorie-charging state,
-- and, when it is in the closed state, prevent the heat transfer liquid coming from the third branch (24) from returning to the heat exchanger (8).

5. The system of one of the preceding claims, wherein the volume of said unit (10) is provided with baffles (12) used to make the heat transfer liquid meander.

6. The system of one of the preceding claims, wherein the unit contains, in the path of the heat transfer liquid, a series of partitions (29) that:
- split the volume into a succession of sub-volumes (7a, 7b, etc.) where said elements (13) for storing and subsequently releasing the thermal energy are arranged in batches,
- and have at least one passage (30) for communication between the sub-volumes.

7. The system of one of the preceding claims, wherein at least the second layer containing the thermally insulating material (23) is contained in at least one pocket (19) impervious to said material and to air so that, an air gap corresponding to a pressure ranging from 10 to 10⁴ Pa being established in said pocket, a vacuum insulation panel is formed.

8. The system of one of the preceding claims, wherein said peripheral wall (5) is made of a mouldable polymer material and laterally limits the volume or each volume (7); and the first and second layers (15, 23) are arranged in said peripheral wall (5).

9. The system of claim 6 alone or in combination with one of claims 7 or 8, wherein:
- the unit (10) comprises several structurally distinct adjacent modules (3) that are stacked along an axis (27) and each containing a sub-volume (7a, 7b, etc.),
- and at least some of the modules individually comprise a bottom (290) separating two adjacent modules transversely to said axis, each bottom corresponding to a said wall where said at least one communication passage (30) allows the heat transfer liquid (9) to enter and exit, the passages being offset laterally with respect to each other along the axis.

10. The system of one of the preceding claims, wherein:
- said at least one volume (7) is delimited by the peripheral wall (5),
- said elements (13) made of phase change material can be arranged in batches in said at least one volume (7),
- and the active thermal barrier is:
-- either fully or partially integrated in the peripheral wall (5),
-- or arranged around the peripheral wall (5).

11. A method for implementing a system of one of the preceding claims, in such a way that:
- in nominal mode, heat transfer liquid having exited the engine (2) flows through the heat exchanger (8), without said heat transfer liquid flowing through the unit (10),
- and, when the unit (10) is in a state where calories are charged through said elements (13) made of phase change material, heat transfer liquid having exited the engine flows through the heat exchanger (8) and then returns to the engine.

12. The method of claim 11 wherein, after said calorie-charging state has been established in the circuit, a state is established in it in which calories are discharged from the unit's (10) elements (13) made of phase change material, by making all of the heat transfer liquid having exited the engine flow through said unit, and then making said heat transfer liquid return to the engine (2).

13. A method for implementing a system of claim 4, wherein:
- in nominal mode, heat transfer liquid (9) having exited the engine flows through the first valve (14') and then through the heat exchanger, without flowing into the unit (10) nor flowing through the second and third valves (16', 18'), which are then closed, the fourth valve (20') being open,
- when the unit (10') is in a calorie-charging state, heat transfer liquid having exited the engine at least partly flows through the second valve (16'), which directs it toward the unit, whereas passage through the first valve (18') toward the heat exchanger and into the second branch (22) is adjusted according to at least one physical parameter in the unit or in the heat exchanger, after which the heat transfer liquid returns to the engine, the fourth valve (20') being open and the third valve being closed,
- when the unit is in a calorie-discharging state, heat transfer liquid having exited the engine flows through the first valve (14'), which directs it exclusively toward the unit through the second branch (22), without flowing through the heat exchanger (8), the fourth valve being closed, after which the heat transfer liquid returns to the engine, the second valve (16') being closed and the third valve being open.

14. The method of claim 13, wherein:
- said physical parameter is a temperature and
- in nominal mode, the first valve (14') shares the flow of said heat transfer liquid between the heat exchanger and said second branch (22) according to a temperature data item related to the heat exchanger.

15. The method of claim 14 wherein, if a power issue occurs on the heat exchanger (8) in nominal mode due to a thermal overload detected by a temperature sensor (26), the fourth valve (20') closes and the third valve (18') opens, to ensure circulation of the heat transfer liquid in the unit (10) after passing through the heat exchanger, and then, once the temperature sensor detects the end of the thermal overload, the first valve (14') again shares the flow of said heat transfer liquid between the heat exchanger and said second branch, while said first valve (14') had directed all of the heat transfer liquid toward the heat exchanger, without flowing through the second branch (22), after the temperature sensor (26) had detected the thermal overload.
